Europäisches Patentamt

European Patent Office

Office européen des brevets

(19)

(11) Veröffentlichungsnummer: **0 002 251**
B1

(12) **EUROPÄISCHE PATENTSCHRIFT**

(45) Veröffentlichungstag der Patentschrift: **22.07.81**

(21) Anmeldenummer: **78101477.4**

(22) Anmeldetag: **30.11.78**

(51) Int. Cl.³: **B 01 J 21/18,**
**B 01 J 37/00, C 01 B 31/12**

(54) Verfahren zur Herstellung abriebfester Aktivkohleträger oder -katalysatoren.

(30) Priorität: **02.12.77 DE 2753674**

(43) Veröffentlichungstag der Anmeldung:
**13.06.79 Patentblatt 79/12**

(45) Bekanntmachung des Hinweises auf die Patenterteilung:
**22.07.81 Patentblatt 81/29**

(84) Benannte Vertragsstaaten:
**BE DE FR GB NL**

(56) Entgegenhaltungen:
CH - A - 550 121
FR - A - 2 202 035
FR - A - 2 257 331
US - A - 3 859 421

(73) Patentinhaber: **HOECHST AKTIENGESELLSCHAFT**
**Postfach 80 03 20**
**D-6230 Frankfurt/Main 80 (DE)**

(72) Erfinder: **Ohorodnik, Alexander, Dr.**
**Kastanienweg 24**
**D-5042 Erftstadt (DE)**
Erfinder: **Gehrmann, Klaus, Dr.**
**Geschwister Scholl-Strasse 32**
**D-5042 Erftstadt (DE)**
Erfinder: **Vierling, Hermann**
**Kapellenstrasse 8**
**D-5030 Hürth (DE)**

Courier Press, Leamington Spa, England.

Verfahren zur Herstellung abriebfester Aktivkohleträger oder -katalysatoren

Aktivkohle ist ein in der chemischen Industrie vielseitig eingesetztes Hilfsmittel, dessen technische Verwendungsmöglichkeiten auf dem hohen Absorptionsvermögen der Aktivkohle für bestimmte Molekülarten beruhen. Der Zustand der Anlagerung an Aktivkohle zeigt alle Übergänge zwischen einer lockeren physikalischen und einer festen chemischen Absorption, wobei letztere für die Verwendung der Aktivkohle als Katalysator oder Katalysatorträger kennzeichnend ist. Ein technisch brauchbarer Katalysator oder Katalysatorträger muß jedoch, abgesehen von seinem Absorptionsvermögen, eine hohe mechanische Stabilität aufweisen. Diese Forderung wird aber von der bisher bekannten Aktivkohle nur in unzureichendem Maße erfüllt. Dadurch wird die Verwendung der Aktivkohle als Katalysator oder Katalysatorträger auf den Einsatz im Festbett beschränkt.

Verläuft die im Festbett durchgeführt Reaktion exotherm oder endotherm, d.h., soll aus dem Festbett Wärme abgeführt oder zugeführt werden, sind hierfür aufwendige Konstruktionen erforderlich, da sich der Festbettkatalysator nicht am Wärmetransport beteiligt. Man bevorzugt daher in der Technik die Durchführung derartiger Reaktionen im Fließbett, wo der Wärmetransport vom Heiz- bzw. Kühlmittel zum Reaktionsmedium im wesentlichen vom Katalysator geleistet wird, der sich im Betriebszustand in ständiger Bewegung zwischen den veschieden temperierten Medien befindet. Die Erfüllung dieser Funktion erfordert neben der katalytischen Wirkung eine hohe mechanische Stabilität, eine definierte Kronverteilung und ein bestimmtes Schüttgewicht des Katalysators. Diese Forderungen kann eine nach den bischerigen Herstellungsmethoden gewonnene Aktivkohle nicht erfüllen, da sie von Natur aus nicht abriebfest ist, ihre feine Körnung nur durch Brechen, Sieben und Rundschleifen erhältlich ist und ihr Schüttgewicht für den betrieb im Fließbett zu gering erscheint.

Die US—A—38 59 421 beschreibt die Herstellung zusammenhängender poröser Formkörper durch Zusammenmischen eines verkohlbaren Bindemittels (z.B. Stärke), einer porenbildenden Flüssigkeit, eines Dispersionsmittels und gegebenenfalls eines Füllmittels (z.B. $SiO_2$, $Al_2O_3$). Porenbildende Flüssigkeit und Dispersionsmittel können auch identisch sein. Die Mischung wird in eine gewünschte Form gegossen, wo sie zu einem selbsttragenden Formkörper erstarrt, der erhitzt wird, so daß sich eine zusammenhängende kohleartige Masse bildet. Dieses Produkt kann angeblich neben vielen anderen Verwendungszwecken auch als Katalysator oder Katalysatorträger dienen. Jedoch kann auf diese Weise ein abriebfester, feinteiliger Fließbettkatalysator nicht hergestellt werden, selbst wenn man den erhaltenen Formkörper fein zermahlen würde.

Gemäß der FR—A—22 02 035 wird ein aktiviertes Aluminium-oxid-Granulat durch Extrusion einer Aufschlämmung von $Al_2O_3$ mit einer Teilchengröße unter 30 $\mu m$, überwiegend um 10 $\mu m$, und Stärkegel gewonnen. Das so geformte, grobteilige Produkt wird getrocknet und in Gegenwart von Luft calciniert, wobei die Stärke völlig verbrennt, also kein Kohlenstoff zurückbleibt. Das Stärkegel ist hierbei als Binde- und Gleitmittel für den Vorgang der Extrusion anzusehen, das anschließend völlig entfernt werden muß. Es ist auch erwähnt, daß man früher ohne Zusatz von Stärkegel — selbst bei Zusatz von Melasse — große Schwierigkeiten bei der Extrusion hatte. Das auf diese Weise hergestellte aktivierte, grobteilige Aluminiumoxid-Granulat bzw. Extrudat kann zwar außer zu Trockenzwecken auch als Katalysatorträger eingesetzt werden, aber es enthält keine Aktivkohle.

Die erfindungsgemäße Arbeitsweise ermöglicht die Herstellung von Aktivkohleträgern, die sowohl die charakteristischen Merkmale von Aktivkohle wie auch die eines funktionsfähigen Fließbettkatalysators aufweisen. Mit diesen Katalysatoren können alle durch Aktivkohle katalysierten Reaktionen unter bedeutend günstigeren technischen Bedingungen auch im Fließbett durchgeführt werden, wie z.B. die Herstellung von Phosgen aus Kohlenmonoxid und Chlor oder die oxidierende Dehydrierung von Äthylbenzol zu Styrol.

Die Erfindung betrifft nun ein Verfahren zur Herstellung abriebfester Aktivkohleträger mit einer Teilchengröße von 20 bis 200 $\mu m$, welches dadurch gekennzeichnet ist, daß man ein abriebfestes Trägermaterial mit einer Teilchengröße von 20 bis 200 $\mu m$ mit der wäßrigen Lösung eines Saccharids imprägniert, wobei die Menge der Lösung kleiner ist als das Porenvolumen des Trägermaterials, trocknet und unter Ausschluß von Luft zu am Trägermaterial fest anhaftender Aktivkohle thermisch zersetzt. Der so hergestellte Aktivkohleträger kann als Katalysator oder als Katalysatorträger verwendet werden.

Das Verfahren der Erfindung kann ferner vorzugsweise dadurch gekennzeichnet sein, daß man

a) als abriebfestes Trägermaterial sprühgetrocknetes $SiO_2$, $Al_2O_3$ oder deren Gemische verwendet;

b) eine 10 bis 90 gewichtsprozentige wäßrige Lösung eines Mono-, Oligo- oder Polysaccharids einsetzt;

c) der wäßrigen Saccharidlösung zwecks Aktivierung der nachfolgenden thermischen Zersetzung als wasserabspaltendes Mittel 5 bis 50 Gewichts% Zinkchlorid oder Phosphorsäure, berechnet auf Saccharid, zusetzt;

d) die thermische Zersetzung zu Aktivkohle in einer Wasserdampf- oder Stickstoffatmosphäre bei 400 bis 800°C vornimmt;

e) nach der thermischen Zersetzung die wasserabspaltenden Mittel mit Wasser aus dem mit Aktivkohle belegten Trägermaterial auswäscht;

**0 002 251**

f) nach der thermischen Zersetzung die wasserabspaltenden Mittel mit verdünnter Salzsäure auskocht und das mit Aktivkohle belegte Trägermaterial mit Wasser neutral wäscht.

Das erfindungsgemäß mit Aktivkohle belegte Trägermaterial wirkt für zahlreiche Reaktionen, z.B. die bereits genannte Herstellung von Phosgen aus Kohlenmonoxid und Chlor, bereits als Katalysator. Für andere Reaktionen stellt das mit Aktivkohle belegte Trägermaterial nur einen Katalysatorträger dar, der erst durch Imprägnierung z.B. mit einer Palladiumsalzlösung zu einem Katalysator wird. Eine derartige Nachbehandlung ist aber an sich bekannt und daher nicht Aufgabe der vorliegenden Erfindung.

Die nach der erfindungsgemäßen Arbeitsweise hergestellten Aktivkohleträger sind einerseits durch die Eigenschaften einer hochwertigen Aktivkohle (BET—Oberfläche: 100—550 m²/g) und andererseits durch die eines optimalen Fließbettkatalysators, d.h. höhere Abriebfestigkeit, geeignete Teilchengröße (20—200 μm), und Schüttgewicht (0,2—1,0 g/ml), gekennzeichnet. Der Abrieb der erfindungsgemäß hergestellten Aktivkohleträger liegt im Betriebszustand in der gleichen Größenordnung wie beim Ausgangsträgermaterial (SiO₂, Al₂O₃).

Als Gerüstmaterial für die erfindungsgemäße Herstellung des Aktivkohleträgers können alle gängigen Trägersorten, die in der Fließbettechnik Verwendung finden, eingesetzt werden. Hierzu gehören reine Kieselsäure, Aluminiumoxid oder Aluminiumsilikate. Bevorzugt sind Produkte, die nach dem Sprühtrocknungsverfahren in abgerundeter, fließbettgerechter Form anfallen. Die BET—Oberfläche kann zwischen 100 und 800 m²/g liegen, während das Porenvolumen möglichst mehr als 0,2 ml/g, bevorzugt mehr als 0,5 ml/g, betragen soll. Das Schüttgewicht kann zwischen 0,2 und 1,0 g/ml liegen. Zur Ausfüllung des Gerüstes mit Aktivkohle eignen sich als Ausgangsstoffe wasserlösliche Polysaccharide, z.B. Stärkesirup, Oligosaccharide, z.B. Zuckersirup, oder Monosaccharide, z.B. Dextrose, denen man als Aktivatoren ZnCl₂, H₃PO₄ oder andere wasserabspaltende Mittel zusetzen kann.

Bei der erfindungsgemäßen Herstellung eines abriebfesten Aktivkohleträgers bestimmt man zweckmäßig zunächst das Porenvolumen des getrockneten abriebfesten Trägermaterials. Liegt dieses Porenvolumen beispielsweise bei einem SiO₂-Träger bei 1 ml/g, so wird dieses Trägermaterial zweckmäßig mit 0.95 ml/g einer wäßrigen Saccharidlösung, die außerdem noch ein wasserabspaltendes Mittel enthalten kann, imprägniert. Da die verwendete Imprägniermittelmenge geringfügig kleiner ist als das Porenvolumen des Trägermaterials, wird die eingesetzte Flüssigkeitsmenge quantitativ vom Träger aufgenommen, so daß eine Verklebung der Teilchen unterbleibt. Das imprägnierte Trägermaterial wird anschließend getrocknet und vom getrockneten Produkt kann man erneut das Porenvolumen bestimmen.

Wird hierbei noch ein beachtliches freies Porenvolumen gefunden, so wird dieses durch Nachimprägnieren mit einer entsprechenden Menge Saccharidlösung aufgefüllt. Ein Nachimprägnieren erübrigt sich, wenn das Restporenvolumen unter 5% des Porenvolumens des Ausgangsmaterials liegt. Wenn also beispielsweise ein SiO₂-Träger mit einem Porenvolumen von 1 ml/g nach dem Imprägnieren mit einer Saccharidlösung und Trocknen noch ein Porenvolumen von 0,04 ml/g aufweist, kann auf das Auffüllen dieses Restporenvolumens verzichtet werden.

In Abhängigkeit vom Porenvolumen des eingesetzten Trägermaterials erhält man nach der thermischen Zersetzung (Wasserabspaltung) Aktivkohleträger mit einem C—Gehalt von 20—50 Gew.%. Die BET—Oberflächen dieser Produkte liegen zwischen 100 und 550 m²/g. Berücksichtigt man aber die Tatsache, daß der Kohlenstoffanteil dieser Materialien nur 20 bis 50 Gew.% beträgt, so ergeben sich auf den Kohlenstoff bezogen BET—Oberflächen, die 2 bis 5 mal größer sind.

Diese Kennzahlen sowie das Zahlenmaterial der nachfolgenden Beispiele veranschaulichen die Variationsmöglichkeiten die die Herstellung abriebfester Fließbettkatalysatoren oder Katalysatorträger auf Aktivkohlebasis nach der erfindungsgemäßen Arbeitsweise bietet.

Die charakteristischen Merkmale einiger als Gerüstträger für die Herstellung abriebfester Aktivkohleträger verwendeten Materialien sind in der Tabelle 1 zusammengefaßt.

Tabelle 1

| Trägermaterial | 1 | 2 | 3 | 4 | 5 | 6 |
|---|---|---|---|---|---|---|
| SiO₂-Gehalt (Gew.%) | 99 | 99 | 87 | 87 | 2,0 | 0,3 |
| Al₂O₃-Gehalt (Gew.%) | 0,18 | 0,08 | 13 | 13 | 98,0 | 99,7 |
| Porenvolumen (ml/g) | 1,08 | 2,0 | 0,7 | 0,7 | 0,5 | 0,42 |
| Schüttgewicht (g/ml) | 0,38 | 0,2 | 0,4 | 0,5 | 0,9 | 0,9 |
| BET—Oberfläche (m²/g) | 658 | 420 | 600 | 600 | 340 | 125 |
| mittlere Teilchengröße (μm) | 80 | 110 | 60 | 130 | 85 | 35 |

3

### Beispiele 1—6

1250 g Dextrose, 125 g ZnCl$_2$ und 300 g Wasser wurden bei 90°C bis zur Bildung einer dünnflüssigen Schmelze erwärmt. Mit dieser Schmelze wurden jeweils 100 g der in Tabelle 1 angeführten getrockneten Trägermaterialien 1—6 durch Einrühren oder Kneten in folgendem Mengenverhältnis imprägniert:

| Trägermaterial Nr. | 1 | 2 | 3 | 4 | 5 | 6 |
|---|---|---|---|---|---|---|
| Dextrose-Schmelzmenge in g | 100 | 190 | 66 | 66 | 46 | 39 |

Die 6 imprägnierten Trägerproben wurden getrennt getrocknet und das noch verbliebene freie Porenvolumen bestimmt. Die hierbei gefundenen Werte lagen zwischen 0,01 und 0,04 ml/g, so daß sich ein Nachimprägnieren erübrigte. Die Umwandlung des Monosaccharids in Aktivkohle durch Wasserabspaltung erfolgte durch allmähliches Erhitzen in einer Stickstoffatmosphäre im Temperaturbereich zwischen 400°C und 800°C. Die Reaktionsdauer lag bei 1 Stunde. Nach der thermischen Behandlung wurden die hierbei erhaltenen Aktivkohleträger zunächst mit verdünnter Salzsäure ausgekocht und dann mit Wasser neutral gewaschen. Die charakteristischen Eigenschaften der so hergestellten Aktivkohleträger sind der Tabelle 2 zu entnehmen:

### Tabelle 2

| Aktivkohleträger auf Trägermaterial Nr. | 1 | 2 | 3 | 4 | 5 | 6 |
|---|---|---|---|---|---|---|
| C—Gehalt (Gew.%) | 25 | 45 | 36,2 | 33,1 | 22,5 | 22,1 |
| Porenvolumen (ml/g) | 0,19 | 0,38 | 0,13 | 0,15 | 0,12 | 0,1 |
| Schüttgewicht (g/ml) | 0,47 | 0,3 | 0,5 | 0,58 | 0,96 | 0,95 |
| BET—Oberfläche (m²/g) | 400 | 350 | 360 | 300 | 220 | 125 |
| mittlere Teilchengröße ($\mu$m) | 80 | 110 | 60 | 130 | 85 | 35 |

### Beispiele 7—12

Die in der Tabelle 1 beschriebenen Trägermaterialien (1—6) wurden mit einer Lösung, bestehend aus 1000 g Dextrose, 300 g Phosphorsäure und 200 g Wasser, imprägniert und analog Beispiel 1—6 verarbeitet. Die hierbei erhaltenen Aktivkohleträger unterscheiden sich von denen der Beispiel 1—6 nur durch um etwa 30% höhere BET—Oberflächen.

### Beispiele 13—18

Die in der Tabelle 1 beschriebenen Trägermaterialien (1—6) wurden mit einer Lösung aus 1000 g Dextrose und 300 g Wasser imprägniert. Die Umwandlung der Dextrose in Aktivkohle wurde in Anwesenheit von Wasserdampf im Temperaturbereich zwischen 500° und 800°C vorgenommen. Die hierbei gewonnenen Produkte weisen die gleichen Fließbetteigenschaften auf wie die nach den Beispielen 1—12 hergestellten Aktivkohleträger, unterscheiden sich jedoch von den nach den Beispielen 1—6 hergestellten Typen durch die um 30—50% geringeren BET—Oberflächen.

**Patentansprüche**

1. Verfahren zur Herstellung abriebfester Aktivkohleträger mit einer Teilchengröße von 20 bis 200 $\mu$m, dadurch gekennzeichnet, daß man ein abriebfestes Trägermaterial mit einer Teilchengröße von 20 bis 200 $\mu$m mit der wäßrigen Lösung eines Saccharids imprägniert, wobei die Menge der Lösung kleiner ist als das Porenvolumen des Trägermaterials, trocknet und unter Ausschluß von Luft zu am Trägermaterial fest anhaftender Aktivkohle thermisch zersetzt.

2. Verfahren nach Anspruch 1, dadurch gekennzeichnet, daß man als abriebfestes Trägermaterial sprühgetrocknetes SiO$_2$, Al$_2$O$_3$ oder deren Gemische verwendet.

3. Verfahren nach einem der vorhergehenden Ansprüche, dadurch gekennzeichnet, daß man eine 10 bis 90 gewichtsprozentige wäßrige Lösung eines Mono-, Oligo- oder Polysaccharids einsetzt.

4. Verfahren nach einem der vorhergehenden Ansprüche, dadurch gekennzeichnet, daß man der wäßrigen Saccharidlösung zwecks Aktivierung der nachfolgenden thermischen Zersetzung als wasser-

.abspaltendes Mittel 5 bis 50 Gewichts% Zinkchlorid oder Phosphorsäure, berechnet auf Saccharid, zusetzt.

5. Verfahren nach einem der vorhergehenden Ansprüche, dadurch gekennzeichnet, daß man die thermische Zersetzung zu Aktivkohle in einer Wasserdampf- oder Stickstoffatmosphäre bei 400 bis 800°C vornimmt.

6. Verfahren nach Anspruch 4 oder 5, dadurch gekennzeichnet, daß man nach der thermischen Zersetzung die wasserabspaltenden Mittel mit Wasser aus dem mit Aktivkohle belegten Trägermaterial auswäscht.

7. Verfahren nach Anspruch 4 oder 5, dadurch gekennzeichnet, daß man nach der thermischen Zersetzung die wasserabspaltenden Mittel mit verdünnter Salzsäure auskocht und das mit Aktivkohle belegte Trägermaterial mit Wasser neutral wäscht.

8. Verwendung eines gemäß einem der Ansprüche 1—7 hergestellten Aktivkohleträgers als Katalysator.

9. Verwendung eines gemäß einem der Ansprüche 1—7 hergestellten Aktivkohleträgers als Katalysatorträger.

## Claims

1. Process for making abrasion-resistant active carbon carriers with a particle size of 20 to 200 $\mu$ which comprises: impregnating an abrasion-resistant carrier having a particle size of 20 to 200 $\mu$ with an aqueous solution of a saccharide, the quantity of solution being smaller than the volume of pores of the carrier, drying the whole and thermally decomposing the saccharide in the absence of air to active carbon which tenaciously adheres to the carrier.

2. Process as claimed in claim 1, wherein spray-dried $SiO_2$, $Al_2O_3$ or a mixture thereof is used as abrasion-resistant carrier.

3. Process as claimed in any of the preceding claims, wherein a 10 to 90 weight% aqueous solution of a monosaccharide, oligosaccharide or polysaccharide is used.

4. Process as claimed in any of the preceding claims, wherein the aqueous saccharide solution is used in admixture with 5 to 50 weight%, based on the saccharide, of zinc chloride or phosphoric acid as a dehydrating agent activating the thermal decomposition of the saccharide.

5. Process as claimed in any of the preceding claims, wherein the thermal decomposition to active carbon is effected in a steam or nitrogen atmosphere at 400 to 800°C.

6. Process as claimed in claim 4 or 5, wherein, after thermal decomposition, the carrier having the active carbon applied thereto is water-washed so as to be freed from the dehydrating agent.

7. Process as claimed in claim 4 or 5, wherein, after thermal decomposition, the carrier having the active carbon carrier applied thereto is boiled out with dilute hydrochloric acid so as to be freed from the dehydrating agent, and water-washed until neutral.

8. Use of an active carbon carrier prepared as claimed in any of claims 1 to 7 as a catalyst.

9. Use of an active carbon carrier prepared as claimed in any of claims 1 to 7 as a catalyst carrier.

## Revendications

1. Procédé de préparation de supports en charbon actif résistants á l'abrasion d'une granulométrie comprise entre 20 et 200 $\mu$, caractérisé en ce que l'on imprègne un support résistant à l'abrasion, d'une granulométrie de 20 à 200 $\mu$, par une solution aqueuse d'un saccharide, la quantité de solution étant inférieure au volume de pores du support, on sèche et on décompose thermiquement à l'abri d'air en charbon actif adhérant solidement au support.

2. Procédé selon la revendication 1, caractérisé en ce que, comme support résistant à l'abrasion, on utilise $SiO_2$ ou $Al_2O_3$ séché par atomisation, ou leurs mélanges.

3. Procédé selon l'une quelconque des revendications précédentes, caractérisé en ce que l'on utilise une solution aqueuse à 10—90% en poids d'un mono-, oligo- ou polysaccharide.

4. Procédé selon l'une quelconque des revendications précédentes, caractérisé en ce que, pour activer la décomposition thermique, on ajoute comme agent déshydratant à la solution aqueuse de saccharide 5 à 50% en poids, par rapport au saccharide, de chlorure de zinc ou d'acide phosphorique.

5. Procédé selon l'une quelconque des revendications précédentes, caractérisé en ce que l'on effectue la décomposition thermique en charbon actif en atmosphère de vapeur d'eau ou d'azote à 400—800°C.

6. Procédé selon la revendication 4 ou 5, caractérisé en ce qu'après décomposition thermique, on élimine par lavage à l'eau les agents déshydratants du support revêtu de charbon actif.

7. Procédé selon la revendication 4 ou 5, caractérisé en ce qu'après décomposition thermique, on élimine les agents déshydratants par ébullition dans l'acide chlorhydrique dilué et on lave à l'eau jusqu'à neutralité le support revêtu de charbon actif.

**0 002 251**

8. Utilisation du support en charbon actif préparé par l'une quelconque des revendications 1 à 7 comme catalyseur.

9. Utilisation du support en charbon actif préparé par l'une quelconque des revendications 1 à 7 comme support pour catalyseurs.